# EUROPÄISCHE PATENTSCHRIFT

(11) **EP 3 198 160 B1**
(45) Veröffentlichungstag und Bekanntmachung des Hinweises auf die Patenterteilung: **10.10.2018**
(21) Anmeldenummer: 15770440.4
(22) Anmeldetag: 26.08.2015
(51) Int. Cl.: F16D 13/52, F16D 13/68

(54) **ZUSCHALTKUPPLUNG FÜR HYBRIDEN ANTRIEBSSTRANG MIT MOMENTENFÜHLER**
CONNECTING CLUTCH FOR A HYBRID DRIVE TRAIN HAVING A TORQUE SENSOR
EMBRAYAGE DE MISE EN CIRCUIT POUR GROUPE MOTOPROPULSEUR HYBRIDE AVEC CAPTEUR DE COUPLE

(30) Priorität: 25.09.2014 DE 102014219479; 19.11.2014 DE 102014223590
(43) Veröffentlichungstag der Anmeldung: 02.08.2017
(73) Patentinhaber: Schaeffler Technologies AG & Co. KG, 91074 Herzogenaurach (DE)
(72) Erfinder: FINKENZELLER, Marc, 77723 Gengenbach (DE); HELMER, Daniel, 77883 Ottenhöfen (DE); SCHMID, Tim, 76316 Malsch (DE)
(86) Internationale Anmeldenummer: PCT/DE2015/200443
(87) Internationale Veröffentlichungsnummer: WO 2016/045672

(56) Entgegenhaltungen:
- WO-A1-2013/087055
- DE-A1-102013 210 451
- DE-A1-102013 216 268
- DE-A1-102014 205 840

## Beschreibung

Die Erfindung betrifft eine Kupplung (auch als Zuschaltkupplung oder E-Clutch bezeichnet) für einen hybriden Antriebsstrang eines Kraftfahrzeuges, wie eines Pkws, Lkws, Busses oder eines landwirtschaftlichen Nutzfahrzeuges, mit einem, drehfest mit einer Ausgangswelle / Kurbelwelle einer Verbrennungskraftmaschine, wie eines Otto- oder Dieselmotors, verbindbaren, ersten Verbindungsbauteil und mit einem, mit einer Welle (Getriebeeingangswelle) eines Getriebes und / oder einen Rotor (vorzugsweise in Form einer Rotorwelle) einer elektrischen Antriebsmaschine drehfest verbindbaren, zweiten Verbindungsbauteil, welche Verbindungsbauteile in einer geschlossenen Stellung der Kupplung drehmomentübertragend miteinander verbunden sind, wohingegen sie in einer geöffneten Stellung der Kupplung voneinander, den Drehmomentenfluss unterbrechend angeordnet sind (d.h. so angeordnet sind, dass kein Drehmoment übertragen wird), und mit einem, einen Rampenmechanismus aufweisenden, die Kupplung zwischen der geöffneten und der geschlossenen Stellung umschaltenden Kupplungsbetätigungssystem, wobei der Rampenmechanismus mittels eines Planetengetriebes mit den Verbindungsbauteilen wirkverbunden ist

Die Erfindung betrifft somit eine Hybridkupplung / Kupplung für einen hybriden Antriebsstrang / Hybridantriebsstrang, der eine Welle aufweist, die je nach beabsichtigter Antriebsart mit einer elektrischen Antriebsmaschine zusammenwirkt, von dieser angetrieben ist und entweder zur gleichen Zeit oder zu einer anderen Zeit mit einer Verbrennungskraftmaschine verbunden ist und von dieser angetrieben ist.

Stand der Technik ist aus der DE 10 2012 222 110 A1 bekannt, die eine Kupplungseinrichtung mit einer Betätigungseinrichtung für einen Antriebsstrang eines Kraftfahrzeuges offenbart. Der Antriebsstrang weist in diesem Zusammenhang eine Brennkraftmaschine und eine elektrische Maschine mit einem Stator und einem Rotor sowie eine Getriebeeinrichtung auf, wobei die Kupplungseinrichtung in dem Antriebsstrang zwischen der Brennkraftmaschine einerseits und der elektrischen Maschine sowie der Getriebeeinrichtung andererseits angeordnet ist. Die Kupplungseinrichtung und die Betätigungseinrichtung sind in den Rotor der elektrischen Maschine integriert.

Bei diesen aus dem Stand der Technik bekannten Ausführungen hat es sich jedoch gezeigt, dass die einzelnen Verbindungsbauteile sowie der auf diese wirkende Rampenmechanismus beim Schließen der Kupplung unter bestimmten Umständen derart relativ zueinander verspannt werden können, dass die Kupplung nur noch mit einem Moment geöffnet werden kann, das das Kupplung zuvor schließende Moment in der Größe überschreitet. In diesen Fällen zieht sich die Kupplung zunächst auf das zu übertragende, d.h. das durch die Ausgangswelle der Verbrennungskraftmaschine ausgegebene Moment, zu und wird damit verspannt. Aufgrund der vorhandenen Elastizitäten im System, insbesondere im Rampensystem des Kupplungsbetätigungssystems und in den Reibbelägen der Kupplung, ist die Verspannkraft relativ groß. Wenn sich daraufhin bei geschlossener Kupplung das Moment am Abtrieb wieder reduziert bzw. gar eine Drehrichtungsumkehr / Momentenrichtungsumkehr bewirkt wird (z.B. bei Zug-Schub-Wechseln), so beharrt die Kupplung so lange in ihrem verspannten Zustand, bis das Moment in umgekehrter Richtung betragsmäßig größer wird, als das Moment, mit dem die Kupplung zuvor zugezogen wurde. Somit sind zum öffnen dieser bekannten Kupplungen zumeist relativ hohe Öffnungsmomente aufzubringen, wodurch der Wirkungsgrad des Kupplungssystems nachteilig beeinflusst wird.

Aus jeder der DE 10 2013 216 268 A1 und der DE 10 2013 210 451 A1 ist eine Kupplung gemäß dem Oberbegriff des Anspruchs 1 bekannt.

Es ist daher die Aufgabe der vorliegenden Erfindung, diese aus dem Stand der Technik bekannten Nachteile zu beheben und eine Kupplung für einen hybriden Antriebsstrang zur Verfügung zu stellen, bei der insbesondere die Kupplungsbetätigung einfacher, d.h. mit einem verbesserten Wirkungsgrad, umgesetzt werden soll.

Diese Aufgabe wird mit den in Anspruch 1 angegebenen Maßnahmen gelöst.

Das erste Verbindungsbauteil zwei, mittels einer Drehmomentspeichereinrichtung drehfest verbundene Leitabschnitte au, wobei die Drehmomentspeichereinrichtung derart ausgestaltet ist, dass die Leitabschnitte zumindest in der geschlossenen Stellung relativ zueinander in einer Drehrichtung (des ersten Verbindungsbauteils) federelastisch vorgespannt sind.

Dies bewirkt, dass mittels der Drehmomentspeichereinrichtung eine Art "Momentenfühler" eingesetzt ist, der als Weichheit in Torsionsrichtung / in Drehrichtung zwischen der Verbindung zur Verbrennungskraftmaschine / zum Verbrenner und dem häufig als inneren Lamellenkorb ausgestalteten Abschnitt des ersten Verbindungsbauteils fungiert. Dieser Momentenfühler speichert das beim Schließen der Kupplung eingeleitete Moment zwischen und ermöglicht es, dass die Kupplung im geschlossenen Zustand nicht verklemmt. Insbesondere während des Vorgangs, in dem das axiale Lüftspiel zwischen den Kupplungsbestandteilen überwunden wird, wird begonnen, die Kupplungsbestandteile, etwa ein Lamellenpaket zu klemmen. Um in diesem Zusammenhang die Kupplung weiter zu schließen, wird die Anpresskraft so aufgebaut, dass eine Relativverdrehung der Leitabschnitte dennoch möglich ist. Dadurch wird ein Verspannen der einzelnen Kupplungsbauteile sowie des Kupplungsbetätigungssystems im Betrieb vermieden und das Risiko einer Verklemmung zumindest wesentlich verringert.

Ddie Drehmomentspeichereinrichtung weist eine mechanische Federeinheit auf. Dadurch ist die Drehmomentspeichereinrichtung besonders einfach, nämlich mittels einfacher, bereits in Masse produzierter Einzelteile, sowie kostengünstig herstellbar. In diesem Zusammenhang ist es zudem von Vorteil, wenn die Federeinheit durch eine Relativverdrehung bei Antrieb eines ersten Leitabschnittes relativ zu einem zweiten Leitabschnitt, der relativ zu dem zweiten Leitabschnitt federelastisch vorgespannt ist, in der (ersten) Drehrichtung einfedert und in dieser federnd wirkt.

Die mechanische Federeinheit weist mehrere mechanische Federelemente auf, die derart zusammenwirken, dass sie über einen Verdrehwinkelbereich hinweg nacheinander ein- oder ausfedern. Insbesondere bei einer Relativverdrehung / Verdrehung des ersten Leitabschnittes relativ zu dem zweiten Leitabschnitt in der erste Drehrichtung wirken diese mechanischen Federelemente derart zusammen, dass sie über den Verdrehwinkelbereich in dieser Drehrichtung nacheinander einfedern / sich elastisch vorspannen. Dadurch ist eine Federeinheit umgesetzt, deren Federkraftkennlinie in Bezug auf den Verdrehwinkel individuell je nach Ausbildung der einzelnen Federelemente ausgestaltet und individuell auf die Eigenschaften des jeweiligen Kupplungsaufbaus angepasst werden kann.

lEin erstes Federelement ist als eine Druckfeder, vorzugsweise eine Schraubenfeder oder eine Bogenfeder, ausgebildet und / oder ein zweites Federelement ist als eine Blattfeder oder ein Blattfederpaket ausgestaltet, wodurch eine Federeinheit umgesetzt ist, deren Kraft für die Kennlinie besonders geschickt auf die jeweilige Kupplung einstellbar ist.

Weitere vorteilhafte Ausführungsformen sind in den Unteransprüchen beansprucht und nachfolgend näher erläutert.

Zudem ist es zweckmäßig, wenn die Drehmomentspeichereinrichtung derart ausgestaltet ist, dass sie in zumindest einem ersten Verdrehwinkelbereich, bei Relativverdrehung des ersten Leitabschnittes relativ zu dem zweiten Leitabschnitt in der (ersten) Drehrichtung eine geringere Federhärte aufweist als eine resultierende Belagfederung der Kupplung. Dadurch ist besonders effektiv vermieden, dass die Federeinheit selbst ungewollt verspannt wird. Die resultierende Belagfederung der Kupplung ist hier eine sich aus den Elastizitäten der einzelnen Kupplungsbestandteile, insbesondere der Reibbeläge, zusammensetzende Gesamtelastizität der Kupplung.

Weiter bevorzugt ist ein erster / der erste Leitabschnitt als ein Verbindungsflanschbauteil zur direkten Verbindung mit einer Ausgangswelle der Verbrennungskraftmaschine oder zur Verbindung mit einem Zwei-Massen-Schwungrad ausgestaltet. Dadurch kann der erste Leitabschnitt besonders geschickt angeordnet werden.

Zweckmäßig ist es zudem, wenn ein zweiter / der zweite Leitabschnitt als ein, zumindest einen ersten Reibbelag aufweisendes, erstes Kupplungsbauteil ausgestaltet ist. Weiter bevorzugt ist dieser zweite Leitabschnitt dann als ein mehrere Reiblamellen, die jeweils mindestens einen ersten Reibbelag aufweisen, aufnehmender Lamellenkorb ausgebildet. Dadurch ist die Ausgangswelle möglichst direkt mit der Kupplung verbunden.

Weiterhin ist es in diesem Zusammenhang vorteilhaft, wenn das zweite Verbindungsbauteil als ein zumindest einen zweiten Reibbelag aufweisendes, zweites Kupplungsbauteil ausgestaltet ist. So ist die Verbindung zwischen der Kupplung und der Welle, etwa der Getriebeeingangswelle, besonders direkt ausgestaltet.

In diesem Zusammenhang ist es weiterhin von Vorteil, wenn die Kupplung als eine Reibkupplung / Reibungskupplung ausgestaltet ist, da bei solchen Reibkupplungen die eingesetzte Drehmomentspeichereinrichtung besonders effizient wirkt.

Weiterhin ist es auch vorteilhaft, wenn das Kupplungsbetätigungssystem mittels einer auf das Planetengetriebe einwirkenden Wirbelstrombremse umschaltbar ist. Insbesondere beim Anlassen der Verbrennungskraftmaschine ist damit eine direkte Kopplung mit der Verbrennungskraftmaschine umgesetzt.

Weiterhin ist es vorteilhaft, wenn die Drehmomentspeichereinrichtung derart ausgebildet ist, dass sie ein von der Verbrennungskraftmaschine einleitbares und / oder von der Kupplung / Lamellenkupplung übertragbares Drehmoment ermittelt. Dadurch ist die Kupplung noch effizienter ausgestaltet.

In anderen Worten ausgedrückt, ist somit eine Kupplung für einen hybriden Antriebsstrang beansprucht, wobei die Zuschaltkupplung vorzugsweise in einen Rotor eines Elektromotors des Antriebsstranges integriert ist oder zumindest mit diesem wirkverbunden ist. Die Zuschaltkupplung ist ausgebildet, eine Verbrennungskraftmaschine / einen Verbrennungsmotor an den Antriebsstrang, nämlich an der Welle / der Getriebeeingangswelle anzukoppeln bzw. von dieser abzukoppeln. Bei rein elektromotorischem Antrieb ist die Zuschaltkupplung offen / geöffnet und befindet sich daher in der geöffneten Stellung, so dass der Verbrennungsmotor vom Antriebsstrang abgekoppelt ist. Wenn eine höhere Leistung benötigt wird oder der elektrische Energievorrat zur Neige geht, wird der Verbrennungsmotor durch teilweise Schließen der Zuschaltkupplung gestartet, indem die Zuschaltkupplung in den Schubbetrieb geht. Hierzu wird vorzugsweise eine elektrische Bremse in Form einer Wirbelstrombremse geschlossen, so dass innerhalb der Zuschaltkupplung eine Drehzahldifferenz zwischen einer lamellenseitigen Rampe ((zweite) Rampe an zweiten Rampenring) der Rampeneinrichtung und einer hohlradseitigen Rame ((erste) Rampe an ersten Rampenring) der Rampeneinrichtung entsteht, durch die mittels eines Planetengetriebes (Erhöhung der Eintrittskraft) das Rampensystem verdreht wird, was die (trockene) Lamellenkupplung der Zuschaltkupplung teilweise einrückt. Dabei wird der Verbrennungsmotor durch den Elektromotor gestartet. Wenn der Verbrennungsmotor schließlich schneller als der Elektromotor dreht (Zugbetrieb), schließt sich vorzugsweise ein Freilauf, wodurch die Zuschaltkupplung vollständig eingerückt wird. Wenn sich der Freilauf im Zugbetrieb schließt, überträgt der Verbrennungsmotor einen Teil seines Drehmoments über ein mit dem Freilauf verbundenes, zusätzliches Sonnenrad des Planetengetriebes, sowie die Planeten und das Hohlrad, auf die hohlradseitige Rampe, so dass die Zuschaltkupplung vollständig eingerückt wird und dann das gesamte Drehmoment des Verbrennungsmotors im Zugbetrieb übertragen wird. Weiterhin ist das Planetengetriebe als ein zweistufiger Planetensatz ausgestaltet, der in der Mitte stegseitig gelagert ist, wobei die großen Zahnräder der Planeten auf der einen Seite der Lagerung mit der Sonne der elektrischen Bremse kämmen und die kleinen Zahnräder der Planeten auf der anderen Seite der Lagerung mit dem Hohlrad (und dem zusätzlichen Sonnenrad, das mit dem Freilauf verbunden ist) kämmen, das drehfest mit dem Hohlrad bzw. dem stegseitigen Rampenring (erster Rampenring) verbunden ist. Der Schwerpunkt jedes Planeten liegt innerhalb der stegseitigen Lagerung des Planeten, entsprechende Kippmomente unter Last gleichen sich aus bzw. werden durch die Sonne auf der einen Seite der stegseitigen Lagerung und das mit dem Freilauf verbundene, zusätzliche Sonnenrad auf der anderen Seite der stegseitigen Lagerung abgestützt. Erfindungsgemäß ist ein Momentenfühler vorgesehen, der ausgebildet ist, ein vom Verbrennungsmotor einleitbares und/oder von der Lamellenkupplung übertragbares Drehmoment zu ermitteln. Sobald der Verbrennungsmotor schneller als die E-Maschine bzw. die Getriebeeingangswelle dreht, schließt sich die Lamellenkupplung selbsttätig (und energiefrei, d.h. ohne Bestromung der Wirbelstrombremse) über den Freilauf. Dieser Freilauf verwendet einen Teil des zu übertagenden Moments und betätigt ebenfalls über den Planetensatz das Kugelrampensystem, wodurch die Lamellenkupplung geschlossen wird. Das von der Wirbelstrombremse erzeugbare Bremsmoment ist, vorzugsweise in Abhängigkeit des vom Momentenfühler ermittelten Drehmoments, variabel. Somit wird eine Relativverdrehung zwischen dem Vorsteuerelement, wie dem Freilauf, und der Hauptkupplung dennoch ermöglicht. Bei Verwendung einer Freilaufvorrichtung / eines Freilaufs zwischen einem Antriebsrad des Planetengetriebes und dem ersten Leitabschnitt, ist der Momentenfühler dann vorzugsweise zwischen der Verbindung zum Verbrenner (zur Verbrennungskraftmaschine) und damit auch zwischen dem Freilauf und dem inneren Lamellenkorb fungierend.

Die Erfindung wird nun nachfolgend anhand von Figuren näher erläutert, in welchen Figuren auch verschiedene Ausführungsformen abgebildet sind.

Es zeigen:

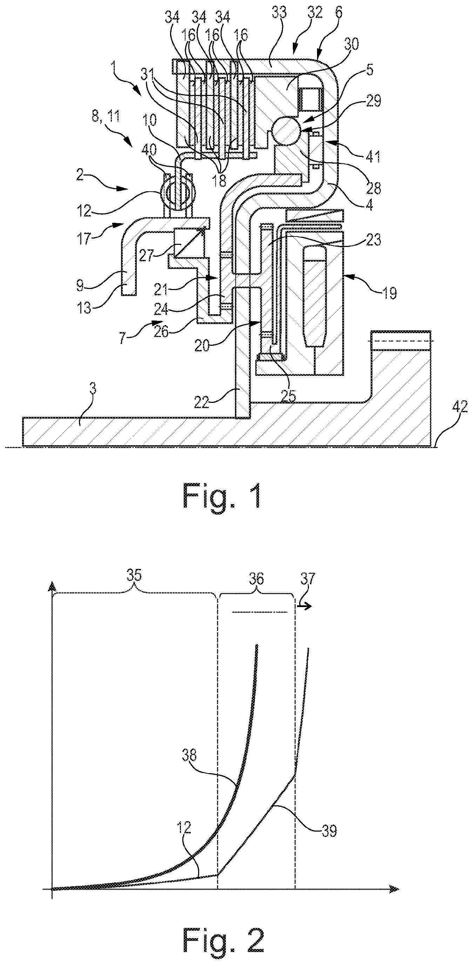

- Fig. 1: eine Längsschnittdarstellung einer erfindungsgemäßen Kupplung nach einer ersten Ausführungsform, wobei die Schnittebene entlang der Drehachse der Kupplung verläuft und unter anderem eine Druckfeder der Drehmomentspeichereinrichtung gut zu erkennen ist,
- Fig. 2: ein Verdrehwinkel-Momenten-Diagramm bzgl. der Kupplung der ersten Ausführungsform, in dem ein Verdrehwinkel-Momentenverlauf der Drehmomentspeichereinrichtung im Vergleich zu dem einer Belagfederung dargestellt ist,

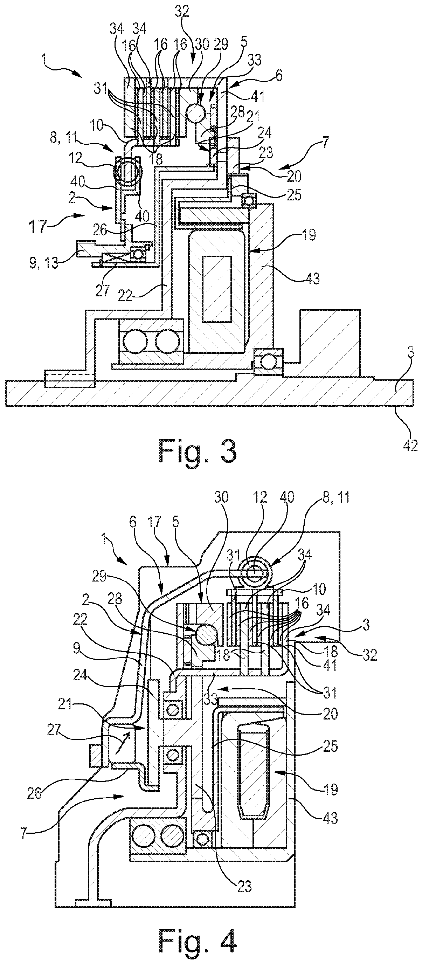

- Fig. 3: eine Längsschnittdarstellung der erfindungsgemäßen Kupplung nach einer zweiten Ausführungsform, welche Kupplung entlang der Drehachse der Kupplung geschnitten ist, wobei jedoch das Planetengetriebe etwas anders ausgestaltet ist und die beiden Planetenradsätze nun nicht axial versetzt, wie in der ersten Ausführungsform, sondern radial außerhalb der eingesetzten Wirbelstrombremse angeordnet sind,
- Fig. 4: eine Längsschnittdarstellung der erfindungsgemäßen Kupplung nach einer dritten Ausführungsform, die wiederum entlang der Drehachse der Kupplung geschnitten ist, wobei nun jedoch der erste Leitabschnitt nicht, wie zuvor radial innerhalb der Reibbeläge mittels der Drehmomentspeichereinrichtung mit dem zweiten Leitabschnitt verbunden ist, sondern diese Verbindungsstelle nun radial außerhalb angeordnet ist, und

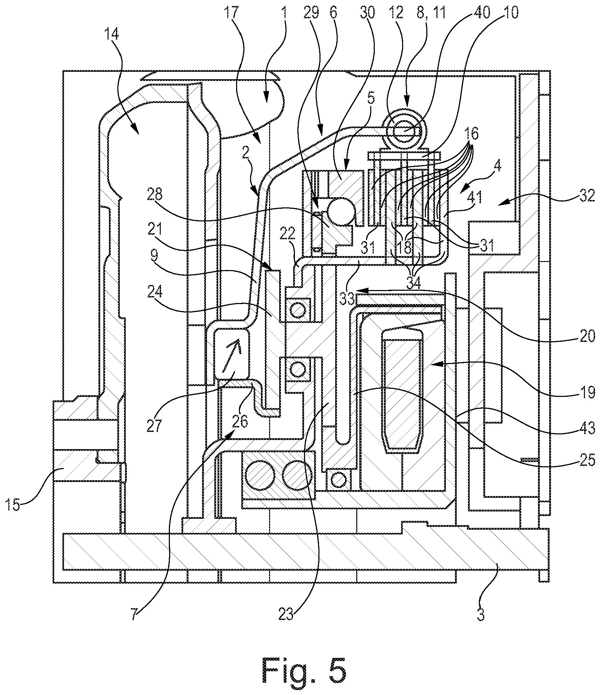

- Fig. 5: nochmals eine Längsschnittdarstellung der Kupplung der dritten Ausführungsform, in der die Kupplung in einem montierten Zustand dargestellt ist, wobei der erste Leitabschnitt drehfest mit einem Zwei-Massen-Schwungrad und dieses wiederum mit einer Ausgangswelle der Verbrennungskraftmaschine verbunden ist und wobei zu erkennen ist, wie die Wirbelstrombremse seitens einer Getrieberückwand angeordnet ist.

Die Figuren sind lediglich schematischer Natur und dienen ausschließlich dem Verständnis der Erfindung. Die gleichen Elemente sind mit denselben Bezugszeichen versehen. Die unterschiedlichen Merkmale der verschiedenen Ausführungsformen können frei miteinander kombiniert werden.

In Fig. 1 ist zunächst ein erstes Ausführungsbeispiel einer erfindungsgemäßen Kupplung 1 besonders anschaulich dargestellt. Die Kupplung 1 ist in dieser Ausführung weiterhin eine Kupplung 1 eines hybriden Antriebsstranges eines Kraftfahrzeuges. Im Weiteren ist die Kupplung 1 als eine Reibkupplung, nämlich eine trocken laufende Reibkupplung ausgestaltet, die in Form einer Lamellenkupplung weiter konstruktiv umgesetzt ist. Die Kupplung 1 weist einen drehfest mit einer Ausgangswelle 15, die bei der nachfolgenden Betrachtung der Fig. 5 zu erkennen ist, einer Verbrennungskraftmaschine verbindbares und im Betriebszustand der Kupplung 1 auch mit dieser Ausgangswelle 15 verbundenes erstes Verbindungsteil 2 auf. Neben diesem ersten Verbindungsbauteil 2, das wie nachfolgend näher erläutert mehrteilig ausgestaltet ist, weist die Kupplung 1 ein mit einer Welle 3, nämlich einer Getriebeeingangswelle eines Getriebes drehfest verbindbares und im Betriebszustand auch drehfest mit dieser Welle 3 verbundenes, zweites Verbindungsbauteil 4 auf. Die Welle 3 ist im Betriebszustand weiterhin auch mit einem Rotor einer hier der Übersichtlichkeit halber nicht weiter dargestellten elektrischen Antriebsmaschine, die auch als Elektromotor bezeichnet ist, zusammenwirkend, nämlich drehfest verbunden. Die Welle 3 ist daher auch als Rotorwelle bezeichnet.

In einer geschlossenen Stellung sind die beiden Verbindungsbauteile 2 und 4 drehmomentübertragend miteinander verbunden, wohingegen sie in einer geöffneten Stellung der Kupplung 1 voneinander, den Drehmomentfluss unterbrechend, angeordnet sind und somit kein Drehmoment zwischen Ihnen übertragen wird. Zur Betätigung der Kupplung 1, nämlich zum Ein- bzw. Ausrücken der Kupplung 1 in die geöffnete bzw. geschlossene Stellung weist die Kupplung 1 weiterhin ein Kupplungsbetätigungssystem 6 auf, das einen Rampenmechanismus 5 umfasst / aufweist. Der Rampenmechanismus 5 rückt wiederum in Abhängigkeit seiner Stellung die Kupplung 1 ein- bzw. aus, und verbringt diese daher in eine geschlossene Stellung bzw. in eine geöffnete Stellung. Das Kupplungsbetätigungssystem 6 ist mittels eines Planetengetriebes 7 mit den beiden Verbindungsbauteilen 2 und 4 wirkverbunden, wobei in Abhängigkeit der Drehzustände der ersten bzw. zweiten Verbindungsbauteile 2 und 4 relativ zueinander der Rampenmechanismus 5 mittels des Planetengetriebes 7 in die geöffnete bzw. in die geschlossene Stellung bewegt ist.

Die Kupplung 1 der erfindungsgemäßen Art ist hierbei im Wesentlichen wie die aus der DE 10 2012 222 110 A1 bekannte Kupplungseinrichtung ausgestaltet und funktionierend.

Das Planetengetriebe 7 ist zweistufig ausgestaltet und weist zwei Planetenradsätze 20 und 21 auf. Wie zunächst besonders gut in Fig. 1 zu erkennen ist, ist das zweite Verbindungsbauteil 4 im Wesentlichen topfförmig ausgestaltet und an seiner radialen Innenseite mit der Welle 3 drehfest verbunden. Radial außerhalb dieser Verbindungsstelle zu der Welle 3 erstreckt sich das zweite Verbindungsbauteil 4 im Wesentlichen scheibenförmig in radialer Richtung weiter nach außen. An diesem scheibenförmigen Abschnitt 22 sind die beiden Planetenradsätze 20 und 21 aufgenommen. Der erste Planetenradsatz 20 weist hier mehrere entlang des Umfangs des zweiten Verbindungsbauteils 4 angeordnete erste Planetenräder 23 auf, die relativ zu dem zweiten Verbindungsbauteil 4 verdrehbar / rotierbar an dem scheibenförmigen Abschnitt 22 gelagert sind.

Jedes erste Planetenrad 23 des ersten Planetenradsatzes 20 ist mit einem zweiten Planetenrad 24 eines zweiten Planetenradsatzes 21 drehfest verbunden. In dieser Ausführungsform ist es gar so, dass diese beiden Planetenräder 23 und 24 integral miteinander ausgebildet sind. Die zweiten Planetenräder 24 sind entlang des Umfangs verteilt angeordnet und entsprechend der Abbildung nach Fig. 1 jeweils stets mit einem zweiten Planetenrad 24 drehfest, nämlich integral, verbunden. Die beiden, jeweils miteinander verbundenen (ersten und zweiten) Planetenräder 23 und 24 sind koaxial, um einen gemeinsamen Achsabschnitt drehbar gelagert. Während das erste Planetenrad 23 auf einer der Verbrennungskraftmaschine im Betriebszustand abgewandten, ersten axialen Seite des scheibenförmigen Abschnittes 22 angeordnet ist, ist das zweite Planetenrad 24 auf einer zweiten axialen Seite des scheibenförmigen Abschnittes 22 angeordnet, welche zweite axiale Seite in axialer Richtung wiederum dem ersten Planetenrad 23 abgewandt ist. Da folglich sowohl das erste als auch das zweite Planetenrad 23 und 24 relativ zu dem zweiten Verbindungsbauteil 4 drehbar gelagert sind, ist dieses zweite Verbindungsbauteil 4 auch als Planetenträger bezeichnet.

Das erste Planetenrad 23, das einen größeren Verzahnungskreisdurchmesser als das zweite Planetenrad 24 aufweist, ist weiterhin mit einem mit der Wirbelstrombremse 19 zusammenwirkenden Zahnrad in Eingriff, welches Zahnrad nachfolgend als erstes Sonnenrad 25 des Planetengetriebes 7 bezeichnet ist. Das erste Sonnenrad 25 ist dabei derart ausgestaltet, dass es mittels eines durch die Wirbelstrombremse 19 erzeugten magnetischen Wirbelstromfeldes zusammenwirkt und durch dieses abbremsbar ist.

Mit jedem zweiten Planetenrad 24 ist ein zweites Sonnenrad 26 des Planetengetriebes 7 in Eingriff. Dieses zweite Sonnenrad 26 ist mittels eines Freilaufes / einer Freilaufeinrichtung 27 mit dem ersten Verbindungsbauteil 2 verbunden / zusammenwirkend. Insbesondere wirkt die Freilaufeinrichtung 27 mit einem ersten Leitabschnitt 9 (auch als Verbindungsflanschbauteil 13 bezeichnet) des ersten Verbindungsbauteils 2 derart zusammen, dass sie bei einer Verdrehung / Relativverdrehung des ersten Verbindungsbauteils 2 relativ zu dem zweiten Verbindungsbauteil 4 in einer ersten Drehrichtung sperrend wirkt, sodass das erste Verbindungsbauteil 2 bzw. dessen erster Leitabschnitt 9 drehfest mit dem zweiten Sonnenrad 25 verbunden ist. Diese erste Drehrichtung ist als eine Relativdrehrichtung zu verstehen, die bedingt, dass sich das erste Verbindungsbauteil 2, nämlich der erste Leitabschnitt 9 schneller in dieser ersten Drehrichtung um die Drehachse 42 dreht als das zweite Verbindungsbauteil 4. In einer geöffneten Position / Stellung der Freilaufeinrichtung 27, nämlich bei Verdrehung / Relativverdrehung des ersten Leitabschnittes 9 in einer zweiten, der ersten Drehrichtung entgegengesetzten, zweiten Drehrichtung, wobei die Drehgeschwindigkeit des zweiten Verbindungsbauteils 4 schneller als die des ersten Verbindungsbauteils 2 ist, sind die beiden Bestandteile zweites Sonnenrad 26 und erster Leitabschnitt 9 nicht miteinander drehfest verbunden, sondern drehen frei, d.h. drehmomentenübertragungslos, zueinander durch.

Neben dem zweiten Sonnenrad 26, ist das zweite Planetenrad 24 auch mit einem als Hohlrad ausgebildeten ersten Rampenring 28 in Eingriff. Der erste Rampenring 28 weist an seiner radialen Innenumfangsseite eine Verzahnung auf, in die die Verzahnung des zweiten Planetenrades 24 eingreift. Der erste Rampenring 28 des Rampenmechanismus 5 ist mittels eines Kugeltriebes 29 mit einem zweiten Rampenring 30 des Rampenmechanismus 5 zusammenwirkend. Der Kugeltrieb 29 ist derart angeordnet und ausgebildet, dass bei einer Verdrehung des ersten Rampenringes 28 der zweite Rampenring 30 in axialer Richtung verschoben wird. Entlang einer an dem ersten und/oder zweiten Rampenring 28, 30 angeordneten Rampe, die sich in einer Umfangsrichtung in ihrer axialen Richtung sich verdickt oder verdünnt, wälzen somit Kugeln des Kugeltriebes 29 bei einer Relativverdrehung zwischen dem ersten und dem zweiten Rampenring 28, 30 ab, wodurch die axiale Position des zweiten Rampenrings 30 verändert wird. Der zweite Rampenring 30, wirkt wiederum mittels einer Stirnfläche mit den Reibbelägen 16, 18 der Kupplung 1zusammen und drückt diese in der geschlossenen Stellung der Kupplung 1 reibkraftschlüssig zusammen oder ist in der geöffneten Stellung der Kupplung 1 so angeordnet, dass kein Drehmoment zwischen den Reibbelägen 16, 18 übertragen wird und die Reibbeläge 16, 18 daher außer reibkraftschlüssigen Kontakt sind.

Erste Reibbeläge 16 sind hierbei durch mehrere Reiblamellen 31 ausgebildet. Die Reiblamellen 31 sind mit einem zweiten Leitabschnitt 10 des ersten Verbindungsbauteils 2 drehfest, jedoch gegenüber diesem in axialer Richtung verschiebbar angeordnet. Die Reiblamellen 31 weisen zu jeder axialen Seite hin einen ersten Reibbelag 16 auf. Der zweite Leitabschnitt 10 und somit auch das erste Verbindungsbauteil 2 bilden somit eine Art erstes Kupplungsbauteil 17 aus.

Das erste Kupplungsbauteil 17 ist reibkraftschlüssig mit einem zweiten Kupplungsbauteil 32 verbindbar. Das zweite Kupplungsbauteil 32 ist in Form des bereits beschriebenen zweiten Verbindungsbauteils 4 ausgestaltet. Zu diesem Zwecke sind an einem in radialer Richtung betrachtet außerhalb des scheibenförmigen Abschnittes 22 angeordneten, in axialer Richtung sich erstreckenden Halteabschnittes 33 des zweiten Verbindungsbauteils 4 mehrere Druckplatten 34 angeordnet. Eine dieser Druckplatten 34, nämlich die am Weitesten in axialer Richtung von dem zweiten Rampenring 30 entfernte (erste) Druckplatte 34 ist hierbei feststehend, d.h. in axialer Richtung fest mit dem Halteabschnitt 33 verbunden. Zwischen je zwei benachbarten Reiblamellen 31 ist jeweils eine (zweite und dritte) Druckplatte 34 angeordnet. Die Druckplatten 34 sind wiederum in axialer Richtung relativ zu den Reiblamellen 31 verschiebbar. Jede Druckplatte 34 bildet wiederum an ihrer, mit einem ersten Reibbelag 16 zusammenwirkenden Seite einen (zweiten) Reibbelag 18 aus. Erste und zweite Reibbeläge 16, 18 sind dann wiederum in der geschlossenen Stellung der Kupplung 1 reibkraftschlüssig miteinander verbunden.

In dieser Ausführungsform sind der Rampenmechanismus 5, das Planetengetriebe 7, der Freilauf 27 sowie das erste Verbindungsbauteil 2 derart zusammenwirkend, dass bei Verdrehung des ersten Leitabschnittes 9 relativ zu dem zweiten Verbindungsbauteil 4 in der ersten Drehrichtung der Rampenmechanismus 5 die Kupplung 1 in die geschlossene Stellung verbringt. Das bedeutet, dass bei einem Drehen des ersten Verbindungsbauteils 2 schneller als das zweite Verbindungsbauteil 4 zunächst der Freilauf 27 sperrt und dann der erste Leitabschnitt 9 drehend das zweite Sonnenrad 26 antreibt. Dieses zweite Sonnenrad 26 treibt wiederum das zweite Planetenrad 24 und dieses wiederum den als Hohlrad ausgebildeten ersten Rampenring 28 an, der sich daraufhin ebenfalls in Abhängigkeit der Übersetzungsstufen mit einer Geschwindigkeit dreht. Die Rampen der einzelnen Rampenringe 28 und 30 sind so aufeinander abgestimmt, dass bei Drehung des ersten Leitabschnittes 9 in der ersten Drehrichtung der erste Rampenring 28 ein axiales Verschieben des zweiten Rampenrings 30 mit seiner Stirnseite in Richtung der Reiblamellen 31 sowie der Druckplatten 34 bewirkt. Mit zunehmendem Moment bewirkt der zweite Rampenring 30 ein immer engeres und stärkeres Zusammendrücken / Zusammenschieben der Reiblamellen 31 und der Druckplatten 34, sodass sich diese drehfest miteinander in der geschlossenen Stellung der Kupplung 1 verbinden. In dieser so erreichten geschlossenen Stellung der Kupplung 1 sind das erste und das zweite Verbindungsbauteil 2, 4 ebenfalls drehfest miteinander verbunden. Diese geschlossene Stellung ist dabei in einem Zustand des hybriden Antriebsstranges umgesetzt, in dem gewünscht ist, dass die Verbrennungskraftmaschine Moment auf die Welle 3 überträgt.

Erfindungsgemäß ist es nun umgesetzt, dass das erste Verbindungsbauteil 2 derart mehrteilig ausgestaltet ist, dass zwischen dem ersten Leitabschnitt 9 und dem zweiten Leitabschnitt 10 eine Drehmomentspeichereinrichtung 8 angeordnet ist, die die beiden Leitabschnitte 9 und 10 miteinander bewegungskoppelt, nämlich drehfest verbindet, jedoch gleichzeitig eine Relativverdrehung zwischen diesen Leitabschnitten 9, 10 zulässt. Die Drehmomentspeichereinrichtung 8 ist derart ausgestaltet, dass der erste Leitabschnitt 9 in der geschlossenen Stellung der Kupplung 1 federelastisch in der ersten Drehrichtung / Relativdrehrichtung des ersten Verbindungsbauteils 2 relativ zu dem zweiten Leitabschnitt 10 vorgespannt ist. Eine Verdrehung des ersten Verbindungsbauteils 2 bewirkt folglich eine Verdrehung des ersten Leitabschnittes 9 in gleicher Richtung und dabei aufgrund der federelastischen Vorspannung eine Relativverdrehung des ersten Leitabschnittes 9 relativ zu dem zweiten Leitabschnitt 10. Bei einem Antreiben des ersten Leitabschnittes 9 relativ zu dem zweiten Verbindungsbauteil 4 kommt es dadurch wiederum zu einer Verdrehung des ersten Verbindungsbauteils 2 in dessen erster Relativdrehrichtung. Dadurch wird eine Weichheit in das System eingebracht, die vermeidet, dass der Rampenmechanismus 5 und / oder die Reiblamellen 31 bzw. die Druckplatten 34 im Betrieb, nämlich in der geschlossenen Stellung, verkanten.

Wie weiterhin zu erkennen ist, weist die Drehmomentspeichereinrichtung 8 eine mechanische Federeinheit 11 auf, die so ausgestaltet ist, dass sie bei Verdrehung des ersten Leitabschnittes 9 relativ zu dem zweiten Leitabschnitt 10 in der ersten Relativdrehrichtung einfedert und somit elastisch vorspannt. Die mechanische Federeinheit 11 weist mehrere mechanische Federelemente auf, wobei hier insbesondere ein erstes Federelement 12 abgebildet ist. Die Federelemente der Federeinheit 11 wirken derart zusammen, dass sie über einen Verdrehwinkel, in der ersten Relativdrehrichtung betrachtet, nacheinander einfedern. Wird folglich die Kupplung 1 in die geschlossene Stellung verbracht, federt zunächst das erste Federelement 12 ein, wie besonders gut auch in Verbindung mit Fig. 2 zu erkennen ist, anschließend ein zweites Federelement und daran wiederum anschließend ein drittes Federelement.

Das erste Federelement 12 ist hierbei als eine Druckfeder in Form einer Schraubenfeder ausgebildet. Das zweite und das dritte Federelement sind dabei wiederum als Blattfedern ausgebildet. Diese können gar Teil eines gemeinsamen Blattfederpaketes sein oder jeweils durch ein separates Blattfederpaket ausgebildet sein.

Wie besonders gut in Verbindung mit Fig. 2 zu erkennen ist, ist der Verdrehwinkel in diesem Diagramm auf der Abszisse aufgetragen und das Drehmoment, das die Verbrennungskraftmaschine erzeugt und somit an dem ersten an dem ersten Leitabschnitt 9 anliegt, auf der Ordinate aufgetragen. Die flacher verlaufende Kurve der beiden dargestellten Drehwinkel-Momentenverläufe stellt dabei den Drehwinkel-Momentenverlauf der Federeinheit 11 dar (nachfolgend als Federeinheitsverlauf 39 bezeichnet). Der etwas steiler verlaufende / schneller ansteigende Verlauf stellt hierbei die in der Kupplung vorhandene Belagfederung dar (Belagfederungsverlauf 38). Die Belagfederung ist hierbei im Wesentlichen aus den sich mit zunehmender Anpresskraft des ersten Rampenrings 28 bzw. des zweiten Rampenrings 30 ansteigenden elastischen Verformung innerhalb der einzelnen Kupplungsbauteile resultierend. Insbesondere die einzelnen Reibbeläge 16 und 18 der Reiblamellen 31 und Druckplatten 34 haben hier in axialer Richtung eine gewisse Elastizität, deren Gesamtheit durch diese strichpunktierte Linie dargestellt ist.

Wie in Fig. 2 weiterhin besonders gut zu erkennen ist, ist die Federeinheit 11 derart ausgebildet, dass sich bei Verdrehung des ersten Leitabschnittes 9 relativ zu dem zweiten Leitabschnitt 10 in der ersten Relativdrehrichtung, über einen ersten Verdrehwinkelbereich 35 hinweg das erste Federelement 12 komprimiert. Dieses erste Federelement 12 ist dabei bzgl. seiner Federhärte derart niedriger als die Belagfederung ausgebildet, dass sich der Federeinheitsverlauf 39 flacher erstreckt als der Belagsfederungsverlauf 38. Nach einem vollständigen Komprimieren dieses ersten Federelementes 12 wird schließlich, bei weiterer Verdrehung des ersten Leitabschnittes 9 relativ zu dem zweiten Leitabschnitt 10 in der ersten Relativdrehrichtung, ein zweites Federelement in einem zweiten Verdrehwinkelbereich 36, der an den ersten Verdrehwinkelbereich 35 anschließt, komprimiert. Hierbei ist die Federhärte dieses als Blattfeder ausgebildeten zweiten Federelementes wiederum schwächer als die Belagfederung. Nach elastischem Komprimieren / Verformen dieses zweiten Federelementes und bei weiterer Verdrehung des ersten Leitabschnittes 9 relativ zu dem zweiten Leitabschnitt 10 in der ersten Relativdrehrichtung greift dann wieder ein drittes Federelement, das wiederum als Blattfeder ausgebildet ist. Auch dieses dritte Federelement, das auf einem an dem zweiten Verdrehwinkelbereich 26 anschließenden dritten Verdrehwinkelbereich 37 elastisch verformt wird, ist dabei stets flacher, d.h. elastisch schwächer ausgebildet, als die Belagfederung. Jedoch sind die drei Federelemente so aufeinander abgestimmt, dass das erste Federelement 12 wiederum eine geringere Federhärte als das zweite Federelement aufweist und das zweite Federelement eine geringere Federhärte als das dritte Federelement aufweist.

Zumindest das erste Federelement 12 ist zwischen dem ersten und dem zweiten Leitabschnitt 9, 10 eingespannt, wobei das erste Federelement 12 an dem ersten Leitabschnitt 9 an radial abstehenden Haltefortsätzen 40 aufgenommen und abgestützt ist.

In Fig. 3 ist dann wiederum eine zweite Ausführungsform der erfindungsgemäßen Kupplung 1 dargestellt. Diese zweite Ausführungsform ist im Wesentlichen wie die erste Ausführungsform wirkend und funktionierend sowie aufgebaut, weshalb nachfolgend lediglich die Unterschiede gegenüber dieser ersten Ausführungsform aufgeführt sind. Wie zunächst hinsichtlich des ersten Verbindungsbauteils 2 zu erkennen ist, ist der erste Leitabschnitt 9 etwas anders ausgebildet. Dieser erste Leitabschnitt 9 ist hier mehrteilig ausgestaltet, wobei ein hülsenförmiger Grundabschnitt, der einen flanschförmigen Absatz aufweist, mit den beiden, die Federeinheit 11 aufnehmenden Haltefortsätze 40 verbunden ist. Die beiden Haltefortsätze 40 zur Halterung der Federelemente, insbesondere des ersten Federelementes 12 sind nicht mehr, wie noch im ersten Ausführungsbeispiel integral mit dem ersten Leitabschnitt 9 verbunden, sondern als separate Bauteile mit dem Grundabschnitt zusammengefügt, vorzugsweise stoff- und/oder kraftschlüssig zusammengefügt.

Zudem ist das Planetengetriebe 7 etwas anders ausgestaltet. Das zweite Planetenrad 24 ist nun radial weiter nach außen versetzt und nicht mehr an dem scheibenförmigen Abschnitt 22, sondern an dem gegenüber diesem scheibenförmigen Abschnitt 22 in axialer Richtung versetzt angeordneten Bodenabschnitt 41 des in Gesamtheit im Wesentlichen topfförmig ausgebildeten zweiten Verbindungsbauteils 4 angebracht. Das zweite Sonnenrad 26 erstreckt sich nun folglich nicht mehr von dem Freilauf 27 in radialer Richtung nach innen weg, wo es dann mit dem zweiten Planetenrad 24 kämmt, sondern von dem Freilauf 27 aus in radialer Richtung nach außen weg.

Zudem ist auch die Verbindung von dem zweiten Verbindungsbauteil 4 mit der Rille 3 besonders gut in Form einer Kerbverzahnung zu erkennen. Auch die Drehachse 42 der Kupplung 1 ist hier deutlich strichpunktiert dargestellt.

Eine dritte vorteilhafte Ausführungsform ist dann mit den Fig. 4 und 5 dargestellt, wobei diese Ausführungsform ebenfalls wie die erste Ausführungsform ausgestaltet ist und nachfolgend deshalb nur auf deren Unterschiede eingegangen wird. Wie hier in diesem Zusammenhang wiederum zu erkennen ist, ist das erste Verbindungsbauteil 2 etwas anders ausgebildet. Dieses erste Verbindungsbauteil 2 weist nun einen im Wesentlichen topfförmig ausgebildeten ersten Leitabschnitt 9 auf, der sich in radialer Richtung von dem Freilauf 27 aus nach außen erstreckt, wobei der erste Leitabschnitt 9 sowohl den Rampenmechanismus 5 als auch das zweite Verbindungsbauteil 4 von radial außen umgibt. Der zweite Leitabschnitt 10 ist hierbei im Wesentlichen als ringförmiges Halteelement ausgestaltet, jedoch wiederum mittels der Drehmomentspeichereinrichtung 8 mit dem ersten Leitabschnitt 9 drehfest verbunden.

Wie dann besonders gut auch in Fig. 5 zu erkennen ist, ist dieser erste Leitabschnitt 9 drehfest mit einem Abtriebsrad eines Zwei-Massen-Schwungrades 14 verbunden, welches Zwei-Massen-Schwungrad 14 neben diesem Abtriebsrad ein Antriebsrad aufweist, das wiederum drehfest mit der Ausgangswelle 15 der Verbrennungskraftmaschine verbunden ist. Zudem ist die Wirbelstrombremse 19 an einer Getrieberückwand 43 angebunden. Auch das Planetengetriebe 7 ist in dieser dritten Ausführungsform anders als in der ersten Ausführungsform ausgebildet, wobei insbesondere der erste Rampenring 28 direkt mit dem ersten Planetenrad 23 des ersten Planetenradsatzes 20 kämmt, wobei das zweite Planetenrad 24 des zweiten Planetenradsatzes 21 nur noch mit dem zweiten Sonnenrad 26 kämmt.

In anderen Worten ausgedrückt, ist somit eine Zuschaltkupplung / Vorsteuerkupplung (Kupplung 1) ausgebildet, die insbesondere für einen hybriden Antriebsstrang ausgestaltet ist und eine Wirbelstrombremse 19 sowie einen Momentenfühler (Drehmomentspeichereinrichtung 8) aufweist. Sowohl die Reiblamellen 31 als auch der Freilauf 27, welcher als Vorsteuerelement fungiert, sind mit dem Verbrennungsmotor / der Verbrennungskraftmaschine verbunden. Solange die E-Maschine schneller als die Verbrennungskraftmaschine dreht, wird der Freilauf 27 überholt (keine Momentenübertragung). Überschreitet die Drehzahl der Verbrennungskraftmaschine die der E-Maschine, schaltet der Freilauf 27 und es wird ein gewisses Moment übertragen. Hierbei wird dieses sog. Vorsteuermoment über die Planetenstufe (20, 21) übersetzt und in Folge der Drehzahldifferenz zwischen Verbrenner und E-Maschine die frei drehbare untere Rampe (erster Rampenring 28) verdreht. Zu diesem Zeitpunkt ist die Hauptkupplung 1 noch offen und es wird über diese noch kein Moment übertragen. Sobald die obere, axial verlagerbare Rampe (zweiter Rampenring 30) das Lüftspiel überwunden hat, beginnt diese das Lamellenpaket 31 zu klemmen. Um die Kupplung 1 weiter zu schließen, ist hierbei eine Relativbewegung zwischen Vorsteuerelement und der Hauptkupplung mittels des Momentenfühlers 8 umgesetzt.

Bei der Auslegung des Momentenfühlers 8 ist darauf zu achten, dass die Kennlinie des Momentenfühlers 8 stets flacher als die des Belags verläuft. Der erste Bereich der Kennlinie des Momentenfühlers wird durch Druckfedern realisiert. Anschließend wird das Moment über Blattfederelemente abgestützt und durch einen Anlagewechsel eine Zweistufigkeit erreicht. Zur Übertragung eines Schubmoments (beim Verbrennerstart oder bei Motorbremse) wird die Spule einer Wirbelstrombremse 19 bestromt, so dass sich ein Magnetfeld ausbildet. Dieses durchdringt die Scheibe (welche mit E-Maschinen bzw. Getriebedrehzahl rotiert) und induziert dabei Wirbelströme, woraus ein Bremsmoment resultiert. Dieses wird über eine Planetenstufe erhöht und die frei drehbare Rampe eines Kugelrampensystems übertragen, in welchem das Drehmoment in eine axiale Anpresskraft umgewandelt wird. Der Rotor, auf den die Planeten sowie das Kugelrampensystem gelagert sind, ist mit der E-Maschine verbunden und beinhaltet den Innenkorb samt Stahllamellen. Mit Hilfe der Anpresskraft wird das Lamellenpaket geklemmt und so die Hauptkupplung zur Momentenübertragung geschlossen. Die axial verschiebbare Rampe ist dabei über Blattfedern mit dem Rotor verbunden, welche eine Rückstellkraft erzeugen und das Kugelrampensystem 6 bei fehlendem Vorsteuermoment in seine Nulllage rückstellen. Zwischen dem Außenkorb 10, welcher die Reiblamellen 31 aufnimmt, ist der Momentenfühler 8 eingebaut, welcher ein Verklemmen des Rampenmechanismus 5 verhindert. Sobald der Verbrenner schneller als die E-Maschine bzw. die Getriebeeingangswelle dreht, schließt sich die Kupplung 1 selbsttätig (und energiefrei) über einen Freilauf 27. Dieser verwendet einen Teil des zu übertragenden Moments und betätigt ebenfalls über den Planetenradsatz / Planetensatz das Kugelrampensystem 6, wodurch die Hauptkupplung geschlossen wird. Eine Betätigung der Wirbelstrombremse 19 ist somit lediglich kurzzeitig für den Start des Verbrenners oder falls der Verbrenner als Motorbremse eingesetzt weden soll, notwendig. Das hierbei übertragbare Moment kann dabei über den durch die Spule fließenden Strom eingestellt werden.

### Bezuaszeichenliste

- 1: Kupplung
- 2: erstes Verbindungsbauteil
- 3: Welle
- 4: zweites Verbindungsbauteil
- 5: Rampenmechanismus
- 6: Kupplungsbetätigungssystem
- 7: Planetengetriebe
- 8: Drehmomentspeichereinrichtung
- 9: erster Leitabschnitt
- 10: zweiter Leitabschnitt
- 11: Federeinheit
- 12: Federelement
- 13: Verbindungsflanschbauteil
- 14: Zwei-Massen-Schwungrad
- 15: Ausgangswelle
- 16: erster Reibbelag
- 17: erstes Kupplungsbauteil
- 18: zweiter Reibbelag
- 19: Wirbelstrombremse
- 20: erster Planetenradsatz
- 21: zweiter Planetenradsatz
- 22: scheibenförmiger Abschnitt
- 23: erstes Planetenrad
- 24: zweites Planetenrad
- 25: erstes Sonnenrad
- 26: zweites Sonnenrad
- 27: Freilaufeinrichtung
- 28: erster Rampenring
- 29: Kugeltrieb
- 30: zweiter Rampenring
- 31: Reiblamelle
- 32: zweites Kupplungsbauteil
- 33: Halteabschnitt
- 34: Druckplatte
- 35: erster Verdrehwinkelbereich
- 36: zweiter Verdrehwinkelbereich
- 37: dritter Verdrehwinkelbereich
- 38: Belag Federungsverlauf
- 39: Federeinheitsverlauf
- 40: Haltevorsatz
- 41: Bodenabschnitt
- 42: Drehachse
- 43: Getrieberückwand

## Patentansprüche

1. Kupplung (1) für einen hybriden Antriebsstrang eines Kraftfahrzeuges, mit
einem, drehfest mit einer Ausgangswelle (15) einer Verbrennungskraftmaschine verbindbaren, ersten Verbindungsbauteil (2),
einem, mit einer Welle (3) eines Getriebes und / oder einen Rotor einer elektrischen Antriebsmaschine drehfest verbindbaren, zweiten Verbindungsbauteil (4), welche Verbindungsbauteile (2, 4) in einer geschlossenen Stellung der Kupplung (1) drehmomentübertragend miteinander verbunden sind, wohingegen sie in einer geöffneten Stellung der Kupplung (1) den Drehmomentfluss unterbrechend angeordnet sind, und
einem, einen Rampenmechanismus (5) aufweisenden, die Kupplung (1) zwischen der geöffneten und der geschlossenen Stellung umschaltenden Kupplungsbetätigungssystem (6), wobei
der Rampenmechanismus mittels eines Planetengetriebes (7) mit den Verbindungsbauteilen (2, 4) wirkverbunden ist,
das erste Verbindungsbauteil (2) zwei, mittels einer Drehmomentspeichereinrichtung (8) drehfest verbundene Leitabschnitte (9, 10) aufweist,
die Drehmomentspeichereinrichtung (8) derart ausgestaltet ist, dass die Leitabschnitte (9, 10) zumindest in der geschlossenen Stellung relativ zueinander in einer Drehrichtung federelastisch vorgespannt sind, und
die Drehmomentspeichereinrichtung (8) eine mechanische Federeinheit (11) aufweist, die mehrere mechanische Federelemente (12) aufweist, die derart zusammenwirken, dass sie über einen Verdrehwinkelbereich hinweg nacheinander ein- oder ausfedern,
**dadurch gekennzeichnet, dass**
ein erstes Federelement (12) als eine Druckfeder und ein zweites Federelement als eine Blattfeder oder ein Blattfederpaket ausgestaltet ist.

2. Kupplung (1) nach Anspruch 1, **dadurch gekennzeichnet, dass** die Drehmomentspeichereinrichtung (8) derart ausgestaltet ist, dass sie in zumindest einem ersten Verdrehwinkelbereich in der Drehrichtung eine geringere, resultierende Federhärte aufweist als eine Belagfederung der Kupplung (1).

3. Kupplung (1) nach Anspruch 1 oder 2, **dadurch gekennzeichnet, dass** ein erster Leitabschnitt (9) als ein Verbindungsflanschbauteil zur direkten Verbindung mit einer Ausgangswelle (15) der Verbrennungskraftmaschine oder zur Verbindung mit einem Zweimassenschwungrad (14) ausgestaltet ist.

4. Kupplung (1) nach einem der Ansprüche 1 bis 3, **dadurch gekennzeichnet, dass** ein zweiter Leitabschnitt (10) zumindest einen ersten Reibbelag (16) aufweist.

5. Kupplung (1) nach einem der Ansprüche 1 bis 4, **dadurch gekennzeichnet, dass** das zweite Verbindungsbauteil zumindest einen zweiten Reibbelag (17) aufweist.

6. Kupplung (1) nach einem der Ansprüche 1 bis 5, **dadurch gekennzeichnet, dass** die Kupplung (1) als eine Reibkupplung ausgestaltet ist.

7. Kupplung (1) nach einem der Ansprüche 1 bis 6, **dadurch gekennzeichnet, dass** das Kupplungsbetätigungssystem (6) mittels einer auf das Planetengetriebe (7) einwirkenden Wirbelstrombremse (19) umschaltbar ist.

## Claims

1. Clutch (1) for a hybrid drive train of a motor vehicle, having a first connecting component (2) which can be connected fixedly to an output shaft (15) of an internal combustion engine so as to rotate with it, a second connecting component (4) which can be connected fixedly to a shaft (3) of a transmission and/or a rotor of an electric drive machine so as to rotate with it, which connecting components (2, 4) are connected to one another in a torque-transmitting manner in a closed position of the clutch (1), whereas they are arranged so as to interrupt the torque flow in an open position of the clutch (1), and a clutch actuating system (6) which has a ramp mechanism (5) and switches over the clutch (1) between the open and the closed position, the ramp mechanism being operatively connected to the connecting components (2, 4) by means of a planetary transmission (7), the first connecting component (2) having two guiding sections (9, 10) which are connected fixedly to one another so as to rotate together by means of a torque storage device (8), the torque storage device (8) being configured in such a way that the guiding sections (9, 10) are prestressed resiliently in a rotational direction relative to one another at least in the closed position, and the torque storage device (8) having a mechanical spring unit (11) which has a plurality of mechanical spring elements (12) which interact in such a way that they compress or rebound after one another over a rotary angle range, **characterized in that** a first spring element (12) is configured as a compression spring and a second spring element is configured as a leaf spring or a leaf spring assembly.

2. Clutch (1) according to Claim 1, **characterized in that** the torque storage device (8) is configured in such a way that, in at least one first rotary angle range, it has a lower resulting spring hardness in the rotational direction than the lining spring system of the clutch (1) .

3. Clutch (1) according to Claim 1 or 2, **characterized in that** a first guiding section (9) is configured as a connecting flange component for direct connection to an output shaft (15) of the internal combustion engine or for connection to a dual-mass flywheel (14).

4. Clutch (1) according to one of Claims 1 to 3, **characterized in that** a second guiding section (10) has at least one first friction lining (16).

5. Clutch (1) according to one of Claims 1 to 4, **characterized in that** the second connecting component has at least one second friction lining (17).

6. Clutch (1) according to one of Claims 1 to 5, **characterized in that** the clutch (1) is configured as a friction clutch.

7. Clutch (1) according to one of Claims 1 to 6, **characterized in that** the clutch actuating system (6) can be switched over by means of an eddy current brake (19) which acts on the planetary transmission (7).

## Revendications

1. Embrayage (1) pour une chaîne cinématique hybride d'un véhicule automobile, avec
un premier élément de liaison (2), pouvant être connecté sans rotation à un arbre de sortie (15) d'un moteur à combustion interne,
un deuxième élément de liaison (4), pouvant être connecté sans rotation à un arbre (3) d'une boîte de vitesses et/ou à un rotor d'une machine d'entraînement électrique, les éléments de liaison (2, 4) sont connectés l'un à l'autre avec transmission de couple dans une position fermée de l'embrayage (1), et ils sont au contraire disposés avec interruption du flux de couple dans une position ouverte de l'embrayage (1), et
un système d'actionnement d'embrayage (6) présentant un mécanisme de rampe (5) et commutant l'embrayage (1) entre la position ouverte et la position fermée, dans lequel
le mécanisme de rampe est activement relié aux éléments de liaison (2, 4) au moyen d'un engrenage planétaire (7),
le premier élément de liaison (2) présente deux parties de direction (9, 10) reliées sans rotation au moyen d'un dispositif d'accumulation de couple (8),
le dispositif d'accumulation de couple (8) est configuré de telle manière que les parties de direction (9, 10) soient, au moins dans la position fermée, précontraintes élastiquement l'une par rapport à l'autre dans un sens de rotation, et
le dispositif d'accumulation de couple (8) présente une unité de ressort mécanique (11), qui présente plusieurs éléments de ressort mécaniques (12), qui coopèrent de telle manière qu'ils s'écrasent ou se détendent l'un après l'autre sur une plage d'angles de rotation, **caractérisé en ce qu'**un premier élément de ressort (12) est formé par un ressort de pression et un deuxième élément de ressort est formé par une lame de ressort ou un paquet de lames de ressort.

2. Embrayage (1) selon la revendication 1, **caractérisé en ce que** le dispositif d'accumulation de couple (8) est configuré de telle manière qu'il présente, dans au moins une première plage d'angles de rotation dans le sens de rotation, une plus faible raideur de ressort résultante qu'une suspension de garniture de l'embrayage (1).

3. Embrayage (1) selon la revendication 1 ou 2, **caractérisé en ce qu'**une première partie de direction (9) est réalisée sous la forme d'un élément de bride de liaison pour la connexion directe avec un arbre de sortie (15) du moteur à combustion interne ou pour la connexion à un volant bi-masse (14).

4. Embrayage (1) selon l'une quelconque des revendications 1 à 3, **caractérisé en ce qu'**une deuxième partie de direction (10) présente au moins une première garniture de friction (16).

5. Embrayage (1) selon l'une quelconque des revendications 1 à 4, **caractérisé en ce que** le deuxième élément de liaison présente au moins une deuxième garniture de friction (17).

6. Embrayage (1) selon l'une quelconque des revendications 1 à 5, **caractérisé en ce que** l'embrayage (1) est constitué par un embrayage à friction.

7. Embrayage (1) selon l'une quelconque des revendications 1 à 6, **caractérisé en ce que** le système d'actionnement d'embrayage (6) peut être commuté au moyen d'un frein à courants de Foucault (19) agissant sur l'engrenage planétaire (7).
